# FASCICULE DE BREVET EUROPEEN

(11) **EP 2 643 918 B1**
(45) Date de publication et mention de la délivrance du brevet: **30.07.2014**
(21) Numéro de dépôt: 11794541.0
(22) Date de dépôt: 10.11.2011
(51) Int. Cl.: H02K 9/28

(54) **ENSEMBLE MONOBLOC REGULATEUR DE TENSION - PORTE-BALAIS DE MACHINE ELECTRIQUE TOURNANTE ET MACHINE ELECTRIQUE TOURNANTE COMPRENANT UN TEL ENSEMBLE**
EINTEILIGE SPANNUNGSREGLER-/BÜRSTENHALTERANORDNUNG FÜR EINE ELEKTRISCHE DREHMASCHINE UND ELEKTRISCHE DREHMASCHINE MIT EINER DERARTIGEN ANORDNUNG
ONE-PIECE VOLTAGE-REGULATOR/BRUSH-HOLDER ASSEMBLY FOR A ROTARY ELECTRICAL MACHINE AND ROTARY ELECTRICAL MACHINE INCLUDING SUCH AN ASSEMBLY

(30) Priorité: 22.11.2010 FR 1059570
(43) Date de publication de la demande: 02.10.2013
(73) Titulaire: Valeo Equipements Electriques Moteur, 94046 Créteil Cedex (FR)
(72) Inventeur: GODEFROY, Grégory, F-94100 Saint Maur Des Fosses (FR); TISSERAND, Pierre, F-94450 Limeil Brevannes (FR); DUGUE, Christophe, F-91120 Palaiseau (FR); SASSANE, Khalid, F-94500 Champigny Sur Marne (FR)
(86) Numéro de dépôt international: PCT/FR2011/052614
(87) Numéro de publication internationale: WO 2012/069726

(56) Documents cités:
- DE-A1-102007 001 218
- FR-A1- 2 886 781
- GB-A- 2 456 679
- US-A1- 2004 080 231

## Description

### DOMAINE TECHNIQUE DE L'INVENTION.

La présente invention concerne un ensemble monobloc régulateur de tension - porte-balais de machine électrique tournante, ainsi qu'une machine électrique tournante comprenant un tel ensemble.

### ARRIERE PLAN TECHNOLOGIQUE DE L'INVENTION.

Un véhicule automobile est généralement équipé d'un alternateur entraîné par le moteur thermique du véhicule pour assurer la charge de la batterie et produire l'énergie électrique nécessaire au réseau électrique de bord auquel sont connectés les divers équipements.

L'alternateur est généralement entraîné par une courroie en prise sur l'arbre moteur. Il est donc implanté au voisinage immédiat du moteur thermique sous le capot moteur.

Compte tenu de l'évolution des moteurs thermiques des véhicules de plus en plus confinés, la température ambiante sous le capot moteur augmente de plus en plus.

Un alternateur est une machine électrique tournante qui comporte essentiellement un rotor solidaire en rotation d'un arbre tournant à l'intérieur d'un stator agencé dans un carter.

Une extrémité de l'arbre du rotor est munie de bagues collectrices sur lesquelles frottent des balais, guidés par un porte-balais supporté par le carter, et qui permettent d'alimenter un enroulement d'excitation du rotor à partir du réseau électrique de bord.

Les enroulements du stator produisent une tension qui, après redressement, est régulée par un régulateur de tension contrôlant le courant d'excitation du rotor.

La même évolution des véhicules qui a conduit à un confinement accru des moteurs thermiques, a entraîné un besoin pour rendre les alternateurs plus compacts.

Il est connu d'intégrer à cette fin le dispositif régulateur de tension et le porte-balais en un ensemble monobloc, en matière électriquement isolante, agencé sur le carter autour du palier de l'arbre du rotor, en regard des bagues collectrices.

Dans l'environnement confiné du capot moteur, la température à laquelle est soumis l'alternateur en fonctionnement peut s'élever jusqu'à 125 °C.

La température des balais peut atteindre 200°C à cause des frottements avec les bagues collectrices.

Un alternateur comprend par conséquent un ventilateur solidaire du rotor, qui aspire l'air relativement frais venant de l'extérieur pour refroidir l'intérieur du carter.

La haute température des balais cause une augmentation de leur usure et une diminution des performances de l'alternateur.

La demande de brevet coréen KR20100048703, au nom de la société VALEO ELECTRICAL SYSTEMS KOREA, propose une solution pour améliorer le refroidissement d'un des balais d'un alternateur de véhicule automobile en faisant circuler à l'intérieur du porte-balais une partie du flux d'air axial aspiré par le ventilateur.
Le document GB 2 456 679 divulgue un porte-balais muni d'un système de refroidissement.

### DESCRIPTION GENERALE DE L'INVENTION.

Le but de la présente invention est d'optimiser et d'améliorer le refroidissement de l'ensemble des balais d'un alternateur ou d'un alterno-démarreur pour véhicule automobile, cet alternateur ou alterno-démarreur comprenant un ensemble monobloc régulateur de tension - porte-balais.

Selon un premier aspect, l'invention concerne un ensemble monobloc régulateur de tension - porte-balais comprend un porte-balais du type de ceux aptes à guider aux moins des premier et second balais, en contact avec deux bagues collectrices d'un rotor de la machine électrique tournante, au moyen de premier et second logements longitudinaux agencés en direction de ces bagues collectrices dans un corps sensiblement parallélépipédique en matière électriquement isolante s'étendant sensiblement dans un plan axial du rotor. Chacun de ces premier et second logements est muni d'au moins une première rainure intérieure longitudinale en communication avec au moins un canal agencé dans le corps du porte-balais selon une direction axiale du rotor et destiné à être traversé par un fluide de refroidissement, tel que l'air.

Conformément à l'invention, l'ensemble monobloc régulateur de tension - porte-balais permettant d'optimiser la circulation de ce fluide de refroidissement comporte une première section droite de la première rainure intérieure qui est comprise entre 5% et 7% d'une deuxième section droite des logements des balais.

Selon une autre caractéristique de l'invention, les premières rainures intérieures correspondant respectivement aux premier et second logements longitudinaux ont des premières sections droites respectives qui sont différentes. Ces sections différentes autorisent des flux d'air de refroidissement différents pour chacun des premier et second logements/balais. En effet, une différence sensible de quelque degrés de température existe généralement entre les logements/balais, le logement/balai le plus proche du palier arrière de la machine ayant généralement une température qui est plus élevée que celle du logement le plus éloigné du palier arrière.

Selon encore une autre caractéristique de l'invention, chacun des premier et second logements est muni avantageusement d'au moins une seconde rainure intérieure longitudinale en communication, ou non, avec ledit canal et présentant une troisième section droite inférieure ou égale à la deuxième section droite.

Selon encore une autre caractéristique de l'invention, la première section droite est avantageusement un premier rectangle, la deuxième section droite est de préférence globalement un deuxième rectangle dont les grands côtés présentent chacun une partie en arc de cercle, et la troisième section est fort avantageusement un troisième rectangle.

L'ensemble monobloc régulateur de tension - porte-balais selon l'invention permettant d'améliorer le refroidissement des balais d'une machine électrique tournante est également remarquable en ce que le corps du porte-balais comporte des ailettes de refroidissement parallèles à la direction axiale du rotor agencées sur au moins une face longitudinale.

Selon une forme de réalisation particulière, ces ailettes présentent un profil carré ou triangulaire ou trapézoïdal. Elles sont agencées fort avantageusement sur la face longitudinale du corps du porte-balais qui est opposée au régulateur de tension.

Selon un autre aspect, l'invention concerne aussi une machine électrique tournante remarquable en ce qu'elle comprend un ensemble monobloc régulateur de tension - porte-balais présentant les caractéristiques optimisées et améliorées précédentes.

Ces quelques spécifications auront rendu évidents pour l'homme de métier les avantages apportés par l'ensemble monobloc régulateur de tension - porte-balais selon l'invention, au plan du refroidissement des balais, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est une vue générale de l'ensemble monobloc régulateur de tension - porte-balais selon l'invention dans une direction radiale d'un rotor d'une machine électrique tournante auquel il est destiné.
La **Figure 2a** montre une vue en coupe du corps du porte-balais selon l'invention dans un premier plan parallèle à l'axe d'un rotor d'une machine électrique tournante auquel il est destiné, et perpendiculaire à la direction longitudinale des logements des balais.
La **Figure 2b** montre une vue en coupe du corps du porte-balais selon l'invention dans un deuxième plan parallèle à l'axe d'un rotor d'une machine électrique tournante auquel il est destiné, et parallèle à la direction longitudinale des logements des balais.
La **Figure 2c** montre une vue en coupe du corps du porte-balais selon l'invention dans un troisième plan parallèle à l'axe d'un rotor d'une machine électrique tournante auquel il est destiné, et parallèle à la direction longitudinale des logements des balais.
La **Figure 3a** est une vue en perspective de l'ensemble monobloc régulateur de tension - porte-balais selon l'invention.
La **Figure 3b** est une vue partielle du corps du porte-balais selon l'invention dans un plan radial d'un rotor d'une machine électrique tournante auquel il est destiné.

### DESCRIPTION D'UN MODE DE REALISATION PREFERE DE L'INVENTION.

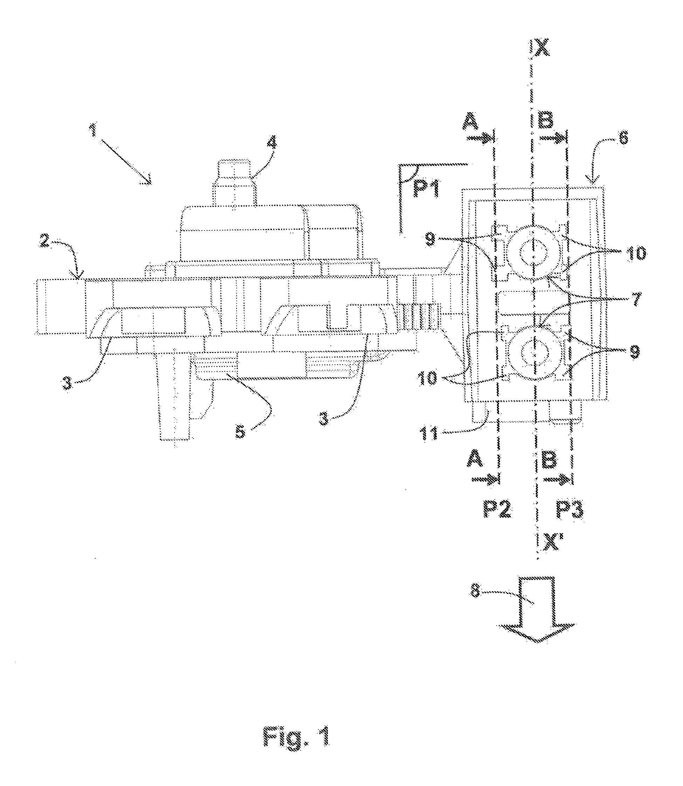

La **Figure 1** montre les éléments essentiels d'un ensemble monobloc régulateur de tension - porte-balais 1 destiné à être fixé sur le carter d'un alternateur au niveau du palier arrière de l'axe du rotor XX':
- une platine 2 supportant les bornes de connexion électrique 3 de l'alternateur au réseau électrique de bord et divers connecteurs 4 ;
- un dispositif régulateur de tension 5;
- un porte-balais 6 comportant des logements 7 pour les balais.

Un ventilateur centrifuge interne (non représenté) monté sur l'arbre du rotor aspire de l'air extérieur et crée un flux d'air 8 axial au voisinage de l'arbre.

Une partie de ce flux d'air 8 circule dans le porte-balais 6 grâce aux rainures intérieures 9, 10 dont sont munis les logements 7 des balais et qui sont en communication avec des cheminées 11 débouchant au plus près du ventilateur.

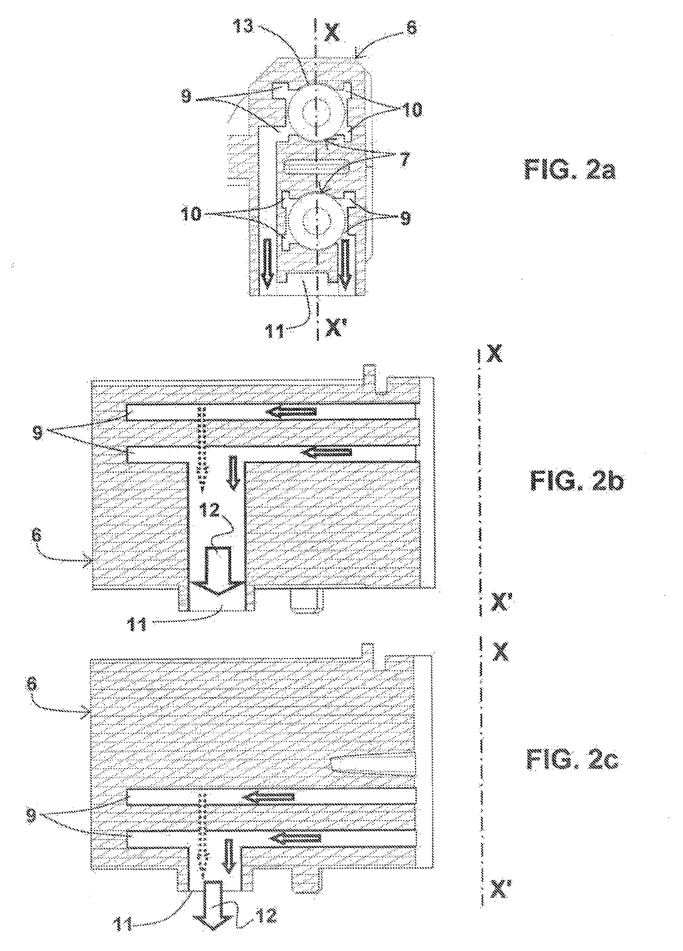

Les **Figures 2a, 2b et 2c** montrent bien l'agencement de ces rainures 9, 10 et de ces canaux 11 axiaux à l'intérieur du corps sensiblement parallélépipédique qui constitue le porte-balais 6.

La **Figure 2a****,** qui est une vue en coupe du corps du porte-balais 6 dans un premier plan P1 parallèle à l'axe XX', du rotor montre qu'il existe des premières rainures intérieures 9 présentant une première section droite relativement grande par rapport à une deuxième section droite des logements 7, alors qu'il existe des secondes rainures intérieures 10 ayant une troisième section droite plus petite.

Comme le montrent bien les **Figures 2b et 2c****,** qui sont respectivement des vues en coupe A-A et B-B du corps du porte-balais 6 selon les deuxième et troisième plans P2, P3 parallèles à l'axe XX' du rotor, seules les premières rainures intérieures communiquent, dans ce mode de réalisation préféré, avec des canaux axiaux 11.

Il a été constaté par l'entité inventive que la circulation 12 de l'air dans le porte-balais 6 était optimum quand la première section droite représentait entre 5 et 7 pour cent d'une deuxième section droite des logements 7 des balais.

Dans cette forme de réalisation, la première section droite est un premier rectangle ayant des dimensions sensiblement égales à 2,0 mm x 1,8 mm. La deuxième section droite est globalement un deuxième rectangle dont les grands côtés présentent chacun une partie 13 en arc de cercle s'adaptant à la forme cylindrique des balais. La troisième section droite est un troisième rectangle ayant des dimensions sensiblement égales à 1,8 mm x 0,9 mm et représentant moins de 3,5 pour cent de la deuxième section droite.

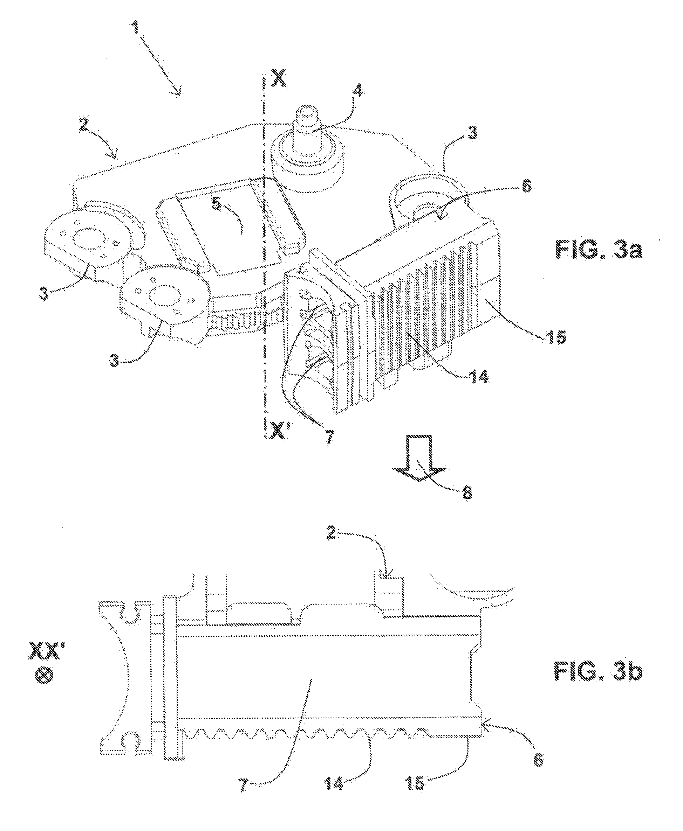

Afin d'améliorer le refroidissement du porte-balais 6 dans l'environnement dont la température peut aller jusqu'à 125 °C, le corps du porte-balais 6 comporte des ailettes de refroidissement 14 sur une face longitudinale 15 agencées dans une direction axiale XX', c'est-à-dire dans le sens du flux d'air 8 aspiré par le ventilateur, comme le montre bien la **Figure 3a****.**

La vue de la **Figure 3b** du corps du porte-balais 6 selon l'invention montre un profil d'ailettes 14 trapézoïdal, mais plusieurs autres profils sont possibles, notamment carrés ou triangulaires. Le meilleur profil est celui qui offre une surface d'échange thermique importante tout en restant simple à réaliser (facilité de démoulage de la pièce).

Ces ailettes 14 sont avantageusement agencées sur la face longitudinale 15 qui est opposée au régulateur de tension 5.

Dans ce mode de réalisation préféré de l'invention, ces ailettes 14, au nombre de 12, présentent un pas longitudinal sensiblement égal à 2 mm et une hauteur d'environ 0,9 mm.

Comme il va de soi, l'invention ne se limite pas au seul mode d'exécution préférentiel décrit ci-dessus.

Les nombres et dimensions des rainures 9,10, canaux 11 et ailettes 14 indiqués ne sont que des exemples. Les critères essentiels de conception d'un ensemble monobloc régulateur de tension - porte-balais 1 selon l'invention sont fournis sous forme de rapports dimensionnels, qui permettent d'appliquer l'invention à des machines électriques tournantes de toutes tailles.

L'invention embrasse donc toutes les variantes possibles de réalisation dans la limite de l'objet des revendications ci-après.

## Revendications

1. Ensemble monobloc régulateur de tension - porte-balais (1) de machine électrique tournante telle qu'alternateur ou alterno-démarreur de véhicule automobile, ledit porte-balais (6) étant du type de ceux aptes à guider aux moins des premier et second balais, en contact avec deux bagues collectrices correspondantes d'un rotor de ladite machine, au moyen de premier et second logements longitudinaux respectifs (7) agencés en direction desdites bagues collectrices dans un corps (6) sensiblement parallélépipédique en matière électriquement isolante s'étendant radialement dans un plan axial dudit rotor, chacun desdits premier et second logements (7) étant munis d'au moins une première rainure intérieure longitudinale respective (9) en communication avec au moins un canal (11) agencé dans ledit corps selon une direction axiale (XX') dudit rotor et destiné à être traversé par un fluide de refroidissement (8,12), tel que l'air, **caractérisé en ce qu'**une première section droite de ladite première rainure intérieure (9) est comprise entre 5% et 7% d'une deuxième section droite desdits logements (7).

2. Ensemble monobloc régulateur de tension - porte-balais (1) de machine électrique tournante selon la revendication 1 précédente, **caractérisé en ce que** lesdites premières rainures intérieures correspondant respectivement aux premier et second logements longitudinaux (7) ont des premières sections droites respectives qui sont différentes.

3. Ensemble monobloc régulateur de tension - porte-balais (1) de machine électrique tournante selon la revendication 1 ou 2 précédente, **caractérisé en ce que** chacun desdits premier et second logements (7) est en outre muni d'au moins une seconde rainure intérieure longitudinale (10) en communication, ou non, avec ledit canal (11) et présentant une troisième section droite inférieure ou égale à ladite deuxième section droite.

4. Ensemble monobloc régulateur de tension - porte-balais (1) de machine électrique tournante selon l'une quelconque des revendications 1 à 3 précédentes, **caractérisé en ce que** ladite première section droite est un premier rectangle, préférentiellement de dimensions sensiblement égales à 2,0 mm x 1,8 mm.

5. Ensemble monobloc régulateur de tension - porte-balais (1) de machine électrique tournante selon l'une quelconque des revendications 1 à 4 précédentes, **caractérisé en ce que** ladite deuxième section droite est globalement un deuxième rectangle dont les grands côtés présentent chacun une partie en arc de cercle (13).

6. Ensemble monobloc régulateur de tension - porte-balais (1) de machine électrique tournante selon l'une quelconque des revendications 1 à 5 précédentes, **caractérisé en ce que** ledit corps (6) comporte des ailettes de refroidissement (14) parallèles à ladite direction axiale (XX') agencées sur au moins une face longitudinale (15).

7. Ensemble monobloc régulateur de tension - porte-balais (1) de machine électrique tournante selon la revendication 6 précédente, **caractérisé en ce que** lesdites ailettes (14) présentent un profil carré ou triangulaire ou trapézoïdal.

8. Ensemble monobloc régulateur de tension - porte-balais (1) de machine électrique tournante selon l'une quelconque des revendications 6 à 7 précédentes, caractérisé en ce lesdites ailettes (14) sont agencées sur ladite face longitudinale (15) qui est opposée audit régulateur de tension (5).

9. Ensemble monobloc régulateur de tension - porte-balais (1) de machine électrique tournante selon l'une quelconque des revendications 6 à 8 précédentes, caractérisé en ce lesdites ailettes (14), de préférence au nombre de 12, présentent un pas longitudinal sensiblement égal à 2 mm et une hauteur d'environ 0,9 mm.

10. Machine électrique tournante **caractérisée en ce qu'**elle comprend un ensemble monobloc régulateur de tension - porte-balais (1) de machine électrique tournante selon l'une quelconque des revendications 1 à 9 précédentes.

## Patentansprüche

1. Einstückige Spannungsregler-Bürstenhalter-Einheit (1) einer drehenden elektrischen Maschine, wie eines Drehstromgenerators oder eines Starter-Generators eines Kraftfahrzeugs, wobei der Bürstenhalter (6) von der Art ist, die mindestens erste und zweite Bürsten in Kontakt mit zwei entsprechenden Schleifringen eines Rotors der Maschine mittels ersten und zweiten Längsaufnahmen (7) führen kann, die in Richtung der Schleifringe in einem im Wesentlichen parallelepipedischen Körper (6) aus elektrisch isolierendem Material eingerichtet sind, der sich radial in einer axialen Ebene des Rotors erstreckt, wobei jede der ersten und zweiten Aufnahmen (7) mit mindestens einer ersten inneren Längsrille (9) in Verbindung mit mindestens einem Kanal (11) versehen ist, der in dem Körper gemäß einer axialen Richtung (XX') des Rotors eingerichtet und dazu bestimmt ist, von einem Kühlmittel (8, 12) wie Luft durchflossen zu werden, **dadurch gekennzeichnet, dass** ein erster Querschnitt der ersten inneren Rille (9) zwischen 5% und 7% eines zweiten Querschnitts der Aufnahmen (7) liegt.

2. Einstückige Spannungsregler-Bürstenhalter-Einheit (1) einer drehenden elektrischen Maschine nach dem vorhergehenden Anspruch 1, **dadurch gekennzeichnet, dass** die ersten inneren Rillen, die den ersten bzw. zweiten Längsaufnahmen (7) entsprechen, erste Querschnitte haben, die sich unterscheiden.

3. Einstückige Spannungsregler-Bürstenhalter-Einheit (1) einer drehenden elektrischen Maschine nach dem vorhergehenden Anspruch 1 oder 2, **dadurch gekennzeichnet, dass** jede der ersten und zweiten Aufnahmen (7) außerdem mit mindestens einer zweiten inneren Längsrille (10) versehen ist, die mit dem Kanal (11) in Verbindung steht oder nicht und einen dritten Querschnitt kleiner als der oder gleich dem zweiten Querschnitt aufweist.

4. Einstückige Spannungsregler-Bürstenhalter-Einheit (1) einer drehenden elektrischen Maschine nach einem der vorhergehenden Ansprüche 1 bis 3, **dadurch gekennzeichnet, dass** der erste Querschnitt ein erstes Rechteck ist, vorzugsweise mit Abmessungen im Wesentlichen gleich 2,0 mm x 1,8 mm.

5. Einstückige Spannungsregler-Bürstenhalter-Einheit (1) einer drehenden elektrischen Maschine nach einem der vorhergehenden Ansprüche 1 bis 4, **dadurch gekennzeichnet, dass** der zweite Querschnitt global ein zweites Rechteck ist, dessen große Seiten je einen kreisbogenförmigen Teil (13) aufweisen.

6. Einstückige Spannungsregler-Bürstenhalter-Einheit (1) einer drehenden elektrischen Maschine nach einem der vorhergehenden Ansprüche 1 bis 5, **dadurch gekennzeichnet, dass** der Körper (6) Kühlrippen (14) parallel zur axialen Richtung (XX') aufweist, die auf mindestens einer Längsseite (15) eingerichtet sind.

7. Einstückige Spannungsregler-Bürstenhalter-Einheit (1) einer drehenden elektrischen Maschine nach dem vorhergehenden Anspruch 6, **dadurch gekennzeichnet, dass** die Rippen (14) ein quadratisches oder dreieckiges oder trapezförmiges Profil aufweisen.

8. Einstückige Spannungsregler-Bürstenhalter-Einheit (1) einer drehenden elektrischen Maschine nach einem der vorhergehenden Ansprüche 6 bis 7, **dadurch gekennzeichnet, dass** die Rippen (14) auf der Längsseite (15) eingerichtet sind, die dem Spannungsregler (5) gegenüberliegt.

9. Einstückige Spannungsregler-Bürstenhalter-Einheit (1) einer drehenden elektrischen Maschine nach einem der vorhergehenden Ansprüche 6 bis 8, **dadurch gekennzeichnet, dass** die Rippen (14), vorzugsweise 12 an der Zahl, einen Längsabstand im Wesentlichen gleich 2 mm und eine Höhe von etwa 0,9 mm haben.

10. Drehende elektrische Maschine, **dadurch gekennzeichnet, dass** sie eine einstückige Spannungsregler-Bürstenhalter-Einheit (1) einer drehenden elektrischen Maschine nach einem der vorhergehenden Ansprüche 1 bis 9 enthält.

## Claims

1. One-piece voltage regulator/brush holder assembly (1) for a rotary electrical machine such as an alternator or alternator-starter of a motor vehicle, the said brush holder (6) being of the type designed to guide at least first and second brushes, in contact with two corresponding collector rings of a rotor of the said machine, by means of respective first and second longitudinal receptacles (7) arranged in the direction of the said collector rings in a substantially parallelepipedal body (6) made of electrically insulating material extending radially in an axial plane of the said rotor, each of the said first and second receptacles (7) being provided with at least a respective first inner longitudinal groove (9) in communication with at least one channel (11) arranged in the said body in an axial direction (XX') of the said rotor and intended to have a cooling fluid (8, 12), such as air, passing through it, **characterized in that** a first cross section of the said first inner groove (9) is comprised between 5% and 7% of a second cross section of the said receptacles (7).

2. One-piece voltage regulator/brush holder assembly (1) for a rotary electrical machine according to the preceding Claim 1, **characterized in that** the said first inner grooves corresponding respectively to the first and second longitudinal receptacles (7) have respective first cross sections which are different.

3. One-piece voltage regulator/brush holder assembly (1) for a rotary electrical machine according to the preceding Claim 1 or 2, **characterized in that** each of the said first and second receptacles (7) is additionally provided with at least a second inner longitudinal groove (10) which is or is not in communication with the said channel (11) and has a third cross section which is smaller than or equal to the said second cross section.

4. One-piece voltage regulator/brush holder assembly (1) for a rotary electrical machine according to any one of the preceding Claims 1 to 3, **characterized in that** the said first cross section is a first rectangle, preferably having dimensions substantially equal to 2.0 mm x 1.8 mm.

5. One-piece voltage regulator/brush holder assembly (1) for a rotary electrical machine according to any one of the preceding Claims 1 to 4, **characterized in that** the said second cross section is overall a second rectangle of which the large sides each have a circular arc portion (13).

6. One-piece voltage regulator/brush holder assembly (1) for a rotary electrical machine according to any one of the preceding Claims 1 to 5, **characterized in that** the said body (6) comprises cooling fins (14) parallel to the said axial direction (XX') and arranged on at least one longitudinal surface (15).

7. One-piece voltage regulator/brush holder assembly (1) for a rotary electrical machine according to the preceding Claim 6, **characterized in that** the said fins (14) have a square or triangular or trapezoidal profile.

8. One-piece voltage regulator/brush holder assembly (1) for a rotary electrical machine according to either one of the preceding Claims 6 and 7, **characterized in that** the said fins (14) are arranged on the said longitudinal surface (15) which is opposed to the said voltage regulator (5).

9. One-piece voltage regulator/brush holder assembly (1) for a rotary electrical machine according to any one of the preceding Claims 6 to 8, **characterized in that** the said fins (14), of which there are preferably 12, have a longitudinal pitch substantially equal to 2 mm and a height of approximately 0.9 mm.

10. Rotary electrical machine, **characterized in that** it comprises a one-piece voltage regulator/brush holder assembly (1) for a rotary electrical machine according to any one of the preceding Claims 1 to 9.
